# EUROPÄISCHE PATENTSCHRIFT

(11) **EP 1 689 606 B1**
(45) Veröffentlichungstag und Bekanntmachung des Hinweises auf die Patenterteilung: **16.09.2009**
(21) Anmeldenummer: 04762480.4
(22) Anmeldetag: 22.07.2004
(51) Int. Cl.: B60K 28/06, B60K 31/00

(54) **VORRICHTUNG ZUR ERMÜDUNGSWARNUNG IN KRAFTFAHRZEUGEN MIT ABST ANDSWARNSYSTEM**
DEVICE FOR WARNING AGAINST FATIGUE IN MOTOR VEHICLES EQUIPPED WITH A DISTANCE WARNING SYSTEM
DISPOSITIF D'AVERTISSEMENT DE FATIGUE DANS DES VEHICULES AUTOMOBILES POURVUS D'UN SYSTEME D'AVERTISSEMENT DE DISTANCE

(30) Priorität: 28.10.2003 DE 10350276
(43) Veröffentlichungstag der Anmeldung: 16.08.2006
(73) Patentinhaber: ROBERT BOSCH GMBH, 70442 Stuttgart (DE)
(72) Erfinder: KOCHER, Pascal, F-67530 Ottrott (FR)
(86) Internationale Anmeldenummer: PCT/DE2004/001630
(87) Internationale Veröffentlichungsnummer: WO 2005/044612

(56) Entgegenhaltungen:
- EP-A- 0 901 055
- WO-A-95/14939
- DE-A- 4 338 244
- DE-A- 10 024 227
- DE-A- 10 135 742
- DE-A- 10 163 967
- FR-A- 2 784 887
- US-A- 5 357 438

## Beschreibung

### Stand der Technik

Die Erfindung betrifft eine Vorrichtung zur Regelung der Geschwindigkeit eines Kraftfahrzeugs nach dem Oberbegriff des Anspruchs 1.

In einer älteren Anmeldung der Anmelderin wird eine Vorrichtung vorgeschlagen, bei der das ein Ermüdungswarnsystem mit einem sogenannten ACC-System (Adaptive Cruise Control) kombiniert ist. ACC-Systeme sind in der Praxis bereits im Einsatz und umfassen als Umfeldsensorik typischerweise einen vorn am Fahrzeug eingebauten Radarsensor, mit dem vorausfahrende Fahrzeuge geortet werden können, sowie einen Regler, der automatisch in das Antriebs- oder Bremssystem des Fahrzeugs eingreift, wenn der Abstand zu dem vorausfahrenden Fahrzeug einen vorgegebenen Sollabstand unterschreitet. Wenn sich der Abstand zum vorausfahrenden Fahrzeug wieder vergrößert, veranlaßt der Regler eine Beschleunigung des Fahrzeugs, so daß der Abstand automatisch auf den Sollabstand geregelt wird. Der Sollabstand ist zumeist durch die sogenannte Zeitlücke definiert, das ist der zeitliche Abstand, in dem das vorausfahrende Fahrzeug und das eigene Fahrzeug einen festen Punkt auf der Fahrbahn passieren. Bei einigen Systemen dieser Art hat der Fahrer die Möglichkeit, die Sollzeitlücke innerhalb gewisser Grenzen, beispielsweise im Bereich zwischen 1 und 2 Sekunden, selbst einzustellen.

Neben ACC-Systemen, bei denen eine automatische Abstandsregelung erfolgt, sind auch Abstandswarnsysteme bekannt, bei denen bei Unterschreitung der Sollzeitlücke, die dann einen Warnabstand kennzeichnet, lediglich ein Warnsignal ausgegeben wird, während die Kontrolle über das Fahrzeug dem Fahrer überlassen bleibt. In dieser Anmeldung wird anstelle des Begriffes "Sollabstand" stets der Begriff "Warnabstand" gebraucht, auch dann, wenn tatsächlich nicht nur eine Warnung, sondern ein Eingriff in das Antriebs- oder Bremssystem erfolgt.

Bei der in der älteren Anmeldung vorgeschlagenen Vorrichtung ist vorgesehen, daß, wenn die Fahrersensorik einem Ermüdungszustand des Fahrers erkennt, das Fahrzeug zwangsweise verzögert und schließlich in den Stand gebremst wird. Durch die Kombination mit dem Abstandsregelsystem soll dabei die Unfallgefahr minimiert werden. Wenn die Fahrbahn vor dem eigenen Fahrzeug frei ist, erfolgt die Verzögerung des Fahrzeugs mit mäßiger Verzögerungsrate, damit der Nachfolgeverkehr nicht irritiert oder gefährdet wird. Wenn dagegen durch die Umfeldsensorik ein vorausfahrendes Fahrzeug geortet wird, erfolgt in Abhängigkeit vom gemessenen Abstand eine stärkere oder schnellere Verzögerung des eigenen Fahrzeugs, damit ein Auffahren auf das vorausfahrende Fahrzeug vermieden wird. Die eingestellte Sollzeitlücke ist jedoch vom Ermüdungszustand des Fahrers unabhängig.

Aus WO 00/24309 A1 ist ein Ermüdungswarnsystem bekannt, bei dem die Fahruntüchtigkeit mit Hilfe eines Kamerasystem festgestellt wird, das speziell auf Bewegungen der Augenlieder des Fahrers reagiert. Dieses Warnsystem ist dazu ausgebildet, bei erkannter Fahruntüchtigkeit nicht nur ein Warnsignal auszugeben und die Warnblinkanlage einzuschalten, sondern auch einen gesteuerten Bremsvorgang einzuleiten, um das Fahrzeug sicher in den Stand abzubremsen.

Bei den meisten bekannten Ermüdungswarnsystemen wird bei Erkennung eines Ermüdungszustands lediglich ein Warnsignal an den Fahrer ausgegeben, beispielsweise ein optisches oder akustisches Warnsignal oder auch ein haptisches Signal, etwa in der Form eines Rüttelns des Lenkrads. Diese Systeme stoßen jedoch bei Kraftfahrern nur auf eine geringe Akzeptanz, da sich der Fahrer durch die häufigen, subjektiv zumeist als unbegründet empfundenen Warnsignale gestört fühlt.

Aus der US 5,357,438 ist ein Antikollisionssystem für Fahrzeuge bekannt, das einen Geschwindigkeitssensor zur Messung der eigenen Fahrzeuggeschwindigkeit, einen Abstandssensor zur Messung der Entfernung des detektierten Objekts zum eigenen Fahrzeug und einen Rechner zur Berechnung eines Kollisionsgefahrabstands sowie einen durch den Rechner ausgelösten Alarm ausweist, der ausgelöst wird, wenn der gemessene Abstand zum Objekt gleich oder kleiner als der vom Rechner ermittelte Kollisionsgefahrabstand ist.

WO95/14939 zeigt ein Radarverfahren und eine zugehörige Vorrichtung, bei der eine Kalman-Filterung durchgeführt wird und Objekte gelöscht werden, die ein physikalisch unwahrscheinliches Verhalten aufweisen. Die Objekte werden bezüglich Abstandswerten, Relativgeschwindigkeit, Relativbeschleunigung sowie Azimutwinkel bewertet und entschieden, ob diese sich auf der eigenen Fahrspur bewegen und welches das für das eigene Fahrzeug gefährlichste Objekt ist. Abhängig vom Fahrerverhalten, den Straßen- und Wetterverhältnissen werden Schwellen für die Anzeige, Warnung oder einen Eingriff bestimmt. Wenn der Abstand, die Relativgeschwindigkeit oder die Relativbeschleunigung der Objekte unter diese Schwellen fällt, werden Anzeigesignale, Warnungssignale oder Eingriffssignale erzeugt.

DE 100 24 227 A beschreibt eine Geschwindigkeitsregelvorrichtung nach dem Oberbegriff des Anspruchs 1, mit einem Ermüdungswarnsystem, das bei erkanntem Ermüdungazustand eine Verringerung der Geschwindigkeit bewirkt.

### Vorteile der Erfindung

Die Erfindung mit den in Anspruch 1 angegebenen Merkmalen bietet den Vorteil, daß die Akzeptanz des Ermüdungswarnsystems erhöht und dennoch eine hohe Verkehrssicherheit erreicht wird.

Es ist zweckmäßig, den erkannten Ermüdungszustand durch eine optische Anzeige auf dem Armaturenbrett si.chtbar zu machen, damit das für den Fahrer ungewohnte Verhalten des Abstandswarnsystems oder Abstandsregelsystems transparent gemacht wird.

### Zeichnung

Ein Ausführungsbeispiel der Erfindung ist in den Zeichnungen dargestellt und in der nachfolgenden Beschreibung näher erläutert.

Es zeigen:
- Figur 1: ein Blockdiagramm der erfindungsgemäßen Vorrichtung; und
- Figur 2: ein Diagramm zur Erläuterung der Veränderung einer Sollzeitlücke in Abhängigkeit vom Ermüdungszustand.

### Beschreibung des Ausführungsbeispiels

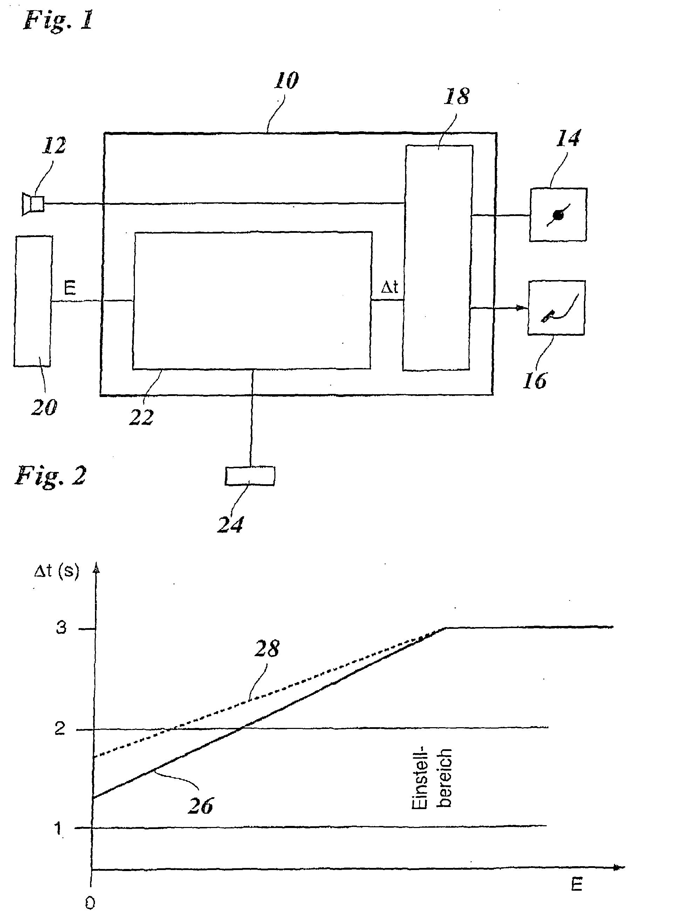

In Figur 1 ist als Blockdiagramm eine durch einen oder mehrere Mikroprozessoren gebildete ACC-Steuereinheit eines Kraftfahrzeugs dargestellt, die Signale von einer Umfeldsensorik 12, beispielsweise von einem vorn am Fahrzeug eingebauten Radarsensor empfängt und anhand des gemessenen Abstands und der Relativgeschwindigkeit eines vorausfahrenden Fahrzeugs in das Antriebssystem 14 und/oder das Bremssystem 16 des Fahrzeugs eingreift, um den Abstand zu dem vorausfahrenden Fahrzeug auf einen durch eine Sollzeitlücke definierten Sollabstand (Warnabstand) zu regeln. Diese Regelfunktionen werden in bekannter Weise von einem Regler 18 der ACC-Steuereinheit 10 ausgeführt.

Zusätzlich weist die erfindungsgemäße Vorrichtung eine Fahrersensorik 20 auf, mit der Ermüdungszustände des Fahrers erfaßt werden können. Diese Fahrersensorik 20 kann z.B., wie an sich bekannt ist, durch ein Kamerasystem und ein elektronisches Bildauswertungssystem gebildet werden, das auf Bewegungen der Augenlider des Fahrers reagiert. Wahlweise oder zusätzlich können zur Erkennung von Ermüdungszuständen jedoch auch andere Kriterien herangezogen werden, beispielsweise die Häufigkeit von relativ abrupten Lenkeingriffen, mit denen der ermüdete Fahrer die Spurhaltung korrigiert. Wenn die Umfeldsensorik 12 auch ein auf die Fahrbahn gerichtetes Kamerasystem umfaßt, mit dem die Fahrbahngrenzen erkannt werden können, lassen sich auch unmittelbar die Häufigkeit und das Ausmaß von Abweichungen von der Spurmitte registrieren.

Vorzugsweise ist die Fahrersensorik 20 so ausgebildet, daß sie die Häufigkeit von Anzeichen für eine Ermüdung des Fahrers statistisch auswertet und aus diesen statistischen Daten einen quantitativen Parameter E (Ermüdungsgrad) berechnet.

Die ACC-Steuereinheit 10 enthält weiterhin eine Einstelleinrichtung 22, die eine Sollzeitlücke Δt bestimmt, die dann im Regler 18 für die Abstandsregelfunktion oder Abstandswarnfunktion zugrundegelegt wird. Ein mit der Einstelleinrichtung 22 verbundenes Bedienelement 24 ermöglicht es dem Fahrer, die normalerweise, wenn kein Ermüdungszustand vorliegt, anzuwendende Zeitlücke ΔT innerhalb eines begrenzten Einstellbereiches von beispielsweise 1 bis 2 Sekunden manuell einzustellen.

Der Ermüdungsgrad E wird von der Fahrersensorik 20 an die Einstelleinrichtung 22 übermittelt und dient dort zur Modifikation der Sollzeitlücke ΔT in Abhängigkeit vom Ermüdungszustand.

Ein Beispiel für die in der Einstelleinrichtung 22 automatisch vorgenommene Modifikation der Sollzeitlücke ist in Figur 2 graphisch dargestellt. Bei Ermüdungsgrad E = 0 gilt die vom Fahrer manuell mit Hilfe des Bedienelements 24 vorgenommene Einstellung. Die so eingestellte Sollzeitlücke ΔT liegt innerhalb des Einstellbereiches zwischen 1 und 2 Sekunden. Mit zunehmendem Ermüdungsgrad wird nun die Sollzeitlücke ΔT linear erhöht, wie durch die durchgezogene Kurve 26 in Figur 2 dargestellt wird. Bei zunehmender Ermüdung kann diese modifizierte Sollzeitlücke auch über die obere Grenze des Einstellbereiches von 2 Sekunden hinaus ansteigen. Schließlich erreicht die Sollzeitlücke bei einem bestimmten Ermüdungsgrad einen Maximalwert, der im gezeigten Beispiel 3 s beträgt, und sie bleibt dann bei noch größerem Ermüdungsgrad konstant.

Durch diese automatische, in Abhängigkeit vom Ermüdungsgrad E vorgenommene Vergrößerung der Sollzeitlücke wird erreicht, daß der Warnabstand oder, bei aktiver Abstandsregelfunktion, der Sollabstand, in dem ein vorausfahrendes Fahrzeug verfolgt wird, mit zunehmendem Ermüdungsgrad größer wird, so daß der bei Ermüdung potentiell längeren Reaktionszeit des Fahrers Rechnung getragen wird.

Wenn der Fahrer innerhalb des Einstellbereiches von 1 bis 2 Sekunden eine größere Sollzeitlücke eingestellt hat oder einstellt, erfolgt die Modifikation der Sollzeitlücke entsprechend der Kurve 28, die in Figur 2 gestrichelt eingezeichnet ist. Auch in diesem Fall wird die Sollzeitlücke linear bis auf den Maximalwert erhöht und bleibt dann konstant. Selbst wenn der Fahrer versucht, mit Hilfe des Bedienelements 24 die Sollzeitlücke nachzujustieren und sie beispielsweise auf den maximal möglichen Wert von 2 s einstellt, ergibt sich so bei größerem Ermüdungsgrad eine zwangsweise Vergrößerung der Sollzeitlücke, die der Fahrer nicht kompensieren kann. Auf diese Weise wird zum einen eine erhöhte Verkehrssicherzeit erreicht und zum anderen der Fahrer diskret dazu angehalten, eine Pause einzulegen.

Normalerweise kann der Fahrer die ACC-Funktion jederzeit durch Eingabe eines entsprechenden Befehls deaktivieren. Die hier vorgeschlagene Vorrichtung kann jedoch auch so ausgebildet sein, daß die ACC-Funktion zwangsweise aktiviert wird und sich dann nicht vom Fahrer deaktivieren läßt, wenn der Ermüdungsgrad E einen bestimmten Schwellenwert überschreitet.

## Patentansprüche

1. Vorrichtung zur Regelung der Geschwindigkeit eines Kraftfahrzeugs, bei der mittels einer Umfeldsensorik (12) der Abstand und die Relativgeschwindigkeit eines vorausfahrenden Fahrzeugs gemessen werden und mittels einer ACC-Steuereinheit (10), durch einen Regeleingriff in das Antriebs- und/oder Bremssystem (14, 16) des Fahrzeugs, der Abstand zum vorausfahrenden Fahrzeug auf einen Sollabstand geregelt wird, aufweisend eine Fahrersensorik (20) zur Erfassung von Ermüdungszuständen des Fahrers als Parameter für die Abstandsregelung, **dadurch gekennzeichnet, daß** der Sollabstand über eine Sollzeitlücke (ΔT) definiert ist, die den zeitlichen Abstand repräsentiert, in dem das vorausfahrende Fahrzeug und das eigene Fahrzeug denselben Punkt auf der Fahrbahn passieren, daß die Vorrichtung eine Einstelleinrichtung (22) mit einem Bedienelement (24) aufweist, das es dem Fahrer gestattet, die Sollzeitlücke (ΔT) innerhalb gewisser Grenzen manuell einzustellen, und daß die Einstelleinrichtung (22) dazu ausgebildet ist, die manuelle Einstellung der Sollzeitlücke in Abhängigkeit vom erfaßten Ermüdungszustand zu übersteuern und bei erkanntem Ermüdungszustand die Sollzeitlücke (ΔT) zwangsweise zu vergrößern.

2. Vorrichtung nach einem der vorstehenden Ansprüche, **dadurch gekennzeichnet, daß** die Fahrersensorik (20) dazu ausgebildet ist, einen Parameter (E) auszugeben, der den Ermüdungszustand quantitativ kennzeichnet, und daß die Einstelleinrichtung (22) dazu ausgebildet ist, die Sollzeitlücke (AT) gemäß einer monoton steigenden Funktion des Parameter (E) zu erhöhen.

## Claims

1. Device for controlling the speed of a motor vehicle in which the distance from a vehicle travelling in front and the relative speed with respect to said vehicle travelling in front are measured by means of a surrounding sensor system (12) and the distance from the vehicle travelling in front is adjusted to a setpoint distance by means of a control intervention into the drive system and/or brake system (14, 16) of the vehicle by means of an ACC control unit (10), said device having a vehicle sensor system (20) for sensing fatigue states of the driver as parameters for the distance control, **characterized in that** the setpoint distance is defined by means of a setpoint time interval (ΔT) which represents the time interval in which the vehicle travelling in front and the driver's own vehicle pass the same point on the carriageway, **in that** the device has a setting device (22) with an operator control element (24) which permits the driver to set the setpoint time interval (ΔT) manually within certain limits, and **in that** the setting device (22) is designed to override the manual setting of the setpoint time interval as a function of the sensed fatigue state and to forcibly increase the setpoint time interval (ΔT) when a fatigue state is detected.

2. Device according to one of the preceding claims, **characterized in that** the driver sensor system (20) is designed to output a parameter (E) which quantitively characterizes the fatigue state, and **in that** the setting device (22) is designed to increase the setpoint time (ΔT) in accordance with a monotonously rising function of the parameter (E).

## Revendications

1. Dispositif de régulation de la vitesse d'un véhicule automobile, dans lequel la distance et la vitesse relative par rapport à un véhicule qui roule en avant sont mesurées au moyen d'un ensemble (12) de détecteurs d'ambiance et la distance par rapport au véhicule qui roule en avant est régulée à une distance de consigne au moyen d'une unité de commande (10), par une intervention de régulation dans le système d'entraînement et/ou dans le système de freinage (14, 16) du véhicule, et présentant un ensemble (20) de détecteurs de conducteur qui détecte l'état de fatigue du conducteur comme paramètre de la régulation de distance,
**caractérisé en ce que**
la distance de consigne est définie par un intervalle de temps de consigne (ΔT) qui représente l'écart temporel entre les instants auxquels le véhicule qui roule en avant et le véhicule propre passent sur le même point de la chaussée,
**en ce que** le dispositif présente un dispositif de réglage (22) doté d'un élément de commande (24) qui permet au conducteur de régler manuellement l'intervalle de temps de consigne (ΔT) à l'intérieur de certaines limites,
**en ce que** le dispositif de réglage (22) est configuré de manière à passer outre à l'intervalle de temps de consigne en fonction de l'état de fatigue détecté et à augmenter de manière forcée l'intervalle de temps de consigne (ΔT) lorsqu'un état de fatigue est détecté.

2. Dispositif selon l'une des revendications précédentes, **caractérisé en ce que** l'ensemble (20) de détecteurs de conducteur est configuré de manière à délivrer un paramètre (E) qui caractérise quantitativement l'état de fatigue et **en ce que** le dispositif de réglage (22) est configuré pour augmenter l'intervalle de temps de consigne (ΔT) selon une fonction à croissance monotone du paramètre (E).
